# EUROPEAN PATENT APPLICATION

(11) **EP 2 301 891 A2**
(43) Date of publication of application: **30.03.2011**
(21) Application number: 10010199.7
(22) Date of filing: 22.09.2010
(51) Int. Cl.: C01B 31/22, F25J 1/02

(54) **System and process for producing solid carbon dioxide pellets**

(30) Priority: 24.09.2009 IT MI20091630
(71) Applicant: MEC S.r.l., 28010 Caltignaga NO (IT)
(72) Inventor: Bernasconi, Attilo, 28010 Caltignaga (NO) (IT)
(74) Representative: Valentini, Giuliano

(57) **Abstract**

A system and a process are described for the production of frozen carbon dioxide pellets in the solid form, in which a heat exchanger device is provided for the formation of pellets made from a container which houses a bundle of tubes, each having an inlet opening, in which carbon dioxide enters in the liquid state and each having an output opening from which the carbon dioxide comes out in the solid stale in the form of pellets. The container includes at least one inlet connection and at least one outlet connection for the circulation of a cooling fluid in the device and is divided into at least three sections separated and connected in series forming at least three zones with different temperatures.

## Description

The present invention relates to a system and a process for the production of frozen carbon dioxide granules (solid CO₂ pellets), e.g. of the type used for cryogenic sand blasting.

The processes currently known in the art for producing dry ice granules comprise the use of liquid CO₂ and expanding it to generate carbonic snow; this is then pressed and passed through an extruder to produce small cylinders (pellets) of dry ice.

The starting CO₂ in the liquid state is commercially available in cylinders kept at room temperature, i.e. at 20°C and at a 57 bar pressure (MPT - Middle Pressure Tank), or stored in a thermally insulated tank at a temperature of -20°C and at a 20 bar pressure (LPT - Low Pressure Tank). The range of use of CO₂ in the liquid state ranges from the critical point (31°C / 74 bar) to the triple point (-56.6°C / 5.18 bar). According to known processes, the liquid CO₂ taken from MPT or LPT type tanks is made to expand in a chamber where pressure can vary from 0 to 2.5 bar, or at least below the triple point pressure of 5.18 bar to generate carbonic snow.

The conversion percentage of liquid CO₂ into carbonic snow is variable and depends on the initial temperature and pressure conditions: for example the percentage may vary between about 20% for high pressures and temperatures (MPT bottles) to about 40% for low pressures and temperatures (LPT tanks). In fact, following the phase diagram of carbon dioxide it is assumed that the lower the temperature and pressure, the greater the amount of solid CO₂ can be generated.

As previously mentioned, the carbonic snow is then pressed and passed through an extruder to produce small cylinders (pellets) of dry ice.

The remaining fraction not converted into carbonic snow consists of CO₂ in the gaseous state that is generally recovered to be used again in the process: this allows saving on raw material costs but inevitably leads to further system and process costs. Alternatively it is also possible to allow the gaseous CO₂ to disperse into the atmosphere, but this entails higher costs for raw materials and may prove to be unacceptable from an environmental point of view.

However, from the phase diagram of carbon dioxide one can derive that if liquid CO₂ is cooled below the sublimation point temperature at 1 bar, i.e. approximately - 78.5°C, and at a pressure higher than the triple point, i.e. 5.18 bar, it is all converted into solid CO₂: therefore, even at the atmospheric pressure (1 bar), CO₂ remains solid, without expanding and without entering a gaseous phase. This way theoretically achieves the full transformation of liquid CO₂ into solid CO₂, i.e. with a theoretical percentage of conversion of 100%.

Based on these observations, EP-A-0663371 proposes a process and a system that allow, in theory, to completely transform the liquid carbon dioxide into carbon dioxide in the solid state, i.e. without any fractions to be recovered and/or be dispersed.

Practically, this known document simply proposes to cool the liquid carbon dioxide by using liquid nitrogen to bring it directly from the liquid to the solid state, avoiding the intermediate step of CO₂ expansion for generating carbonic snow and the consequential loss of a substantial portion of carbon dioxide in the gaseous form. Particularly, the liquid carbon dioxide is passed into a plurality of cylindrical ducts placed in an exchanger where liquid nitrogen is circulated, i.e. a cooling fluid that removes heat from liquid carbon dioxide causing its solidification. The pressure required to form and expel the pellets from the cylindrical ducts is ensured by the same carbon dioxide supplied in the liquid state.

However, the carbon dioxide within the cylindrical ducts tends to solidify immediately along the whole length of ducts, thus preventing the hydraulic pressure of carbon dioxide provided in the liquid state to push the solidified pellets to the outlet of the ducts.

Accordingly, one aim of the present invention is to propose a system and a process for the production of pellets or granules of carbon dioxide in the solid state that provide a theoretical yield of 100% in the conversion of carbon dioxide from the liquid state to the solid state.

Another aim of the present invention is to propose a system and a process of the above mentioned type enabling optimal use of the heat-removing ability of the cooling fluid.

These aims are achieved by the present invention through a system according to claim 1 and to a process according to claim 9. Additional peculiar characteristics of the present invention are set forth in the respective dependent claims.

In the system according to the present invention at least one heat exchanger is provided for the formation of pellets having a container in which a bundle of tubes is housed each having an inlet opening, in which carbon dioxide enters in the liquid state, and each having an output opening from which the carbon dioxide comes out in the solid state in the form of pellets. The container includes at least one inlet connection and at least one outlet connection for the circulation of a cooling fluid within the device. The container is advantageously subdivided into at least three separate sections and connected in series to form, in said heat exchanger device for the formation of pellets, at least three zones at different temperatures.

In this way, a device is obtained for the formation of pellets in which a section receives carbon dioxide in the liquid state without solidifying it immediately, a subsequent section lowers the temperature of carbon dioxide to facilitate the liquid/solid phase transition and only in a further sequential section the temperature is lowered to values low enough to obtain exiting solid pellets. In this way, the tubes in which carbon dioxide is conducted are not obstructed by a solid fraction throughout their whole length, but only in the final output section of solidified pellets.

In the present invention, nitrogen as a cooling fluid in either a liquid or a gaseous state is preferably used.

In fact, the container of the device that forms pellets includes at least a first end section, in which the cooling fluid enters in the liquid state and at least a second end section from which the cooling fluid comes out in the gaseous state.

Temperature controlled means are preferably provided for regulating the flow of cooling fluid between the output of the cooling fluid from a section of the container and the input of the cooling fluid into the next section.

In the system according to the present invention is also preferably provided at least one intermediate heat exchanger placed between the source of carbon dioxide in the liquid state and the heat exchanger device for the formation of pellets.

In the intermediate heat exchanger at least a fraction of the cooling fluid is circulated in the gaseous state that comes out of the container of the device for the formation of pellets. In fact, the cooling fluid exiting from the container of the device for the formation of pellets is in the gaseous state at a temperature low enough to be conducted into the inlet of the intermediate heat exchanger.

In addition, the cooling fluid in the gaseous state is periodically circulated along a closed circuit within the intermediate heat exchanger. This allows to exploit as much as possible the heat removal capacity of the cooling fluid being used.

In this way, the liquid carbon dioxide is preventively cooled in the heat exchanger before being fed to the intermediate heat exchanger device for the formation of pellets, bringing the temperature near the triple point (-56.6°C), and then gradually further cooled in the heat exchanger device for the formation of pellets.

The pellets can be formed in the device by way of hydraulic pressure provided for example, by a pump or, alternatively, by way of mechanical pressure exerted by at least one mobile element, such as a piston with mechanical, hydraulic or electric drive.

According to another aspect of the present invention, a process is proposed for the production of frozen carbon dioxide pellets in the solid state, comprising the steps of:
a) withdrawing carbon dioxide in the liquid state from a source at a pre-set temperature and pressure and feeding it to at least one heat exchanger device for the formation of pellets, the device including a container which houses a bundle of tubes, each having an inlet opening, in which carbon dioxide enters in the liquid state and each having an outlet opening from which the carbon dioxide comes out in the solid state in the form of pellets, the container including at least one inlet connection and at least one outlet connection for the circulation of cooling fluid within the device;
b) circulating a cooling fluid in the container that houses the tubes to keep them at a temperature lower than that of the carbon dioxide in the liquid state within its source;
characterized in that the container is divided into at least three separate sections and connected in series to form, within the heat exchanger device for the formation of pellets, at least three zones at different temperatures.

Preferably, the carbon dioxide in the liquid state is cooled to a temperature between the temperature of the liquid carbon dioxide of its source and the temperature of the triple point of the carbon dioxide, the cooling being achieved by way of an intermediate heat exchanger in which the cooling fluid is put into circulation. Additional features and advantages of the present invention will become apparent from the following description, made with reference to the attached drawings by way of illustration and not limitation, in which:
- Figure 1 is a diagram of a system for the production of carbon dioxide pellets in the solid state according to a possible embodiment of the present invention;
- Figure 2 is a schematic cross-section view of a heat exchanger device for the formation of pellets;
- Figure 3 is a longitudinal section view illustrating the heat exchanger device for the formation of pellets and the means to exert pressure according to an embodiment of the present invention;
- Figure 4 schematically illustrates the formation of pellets in one of the tubes of the heat exchanger device for the formation of pellets; and
- Figure 5 is a longitudinal section view illustrating a heat exchanger device for the formation of pellets and its mechanical means to exert pressure according to another embodiment of the present invention, and
- Figure 6 is a diagram illustrating the process according to the present invention on the phase diagram of carbon dioxide.

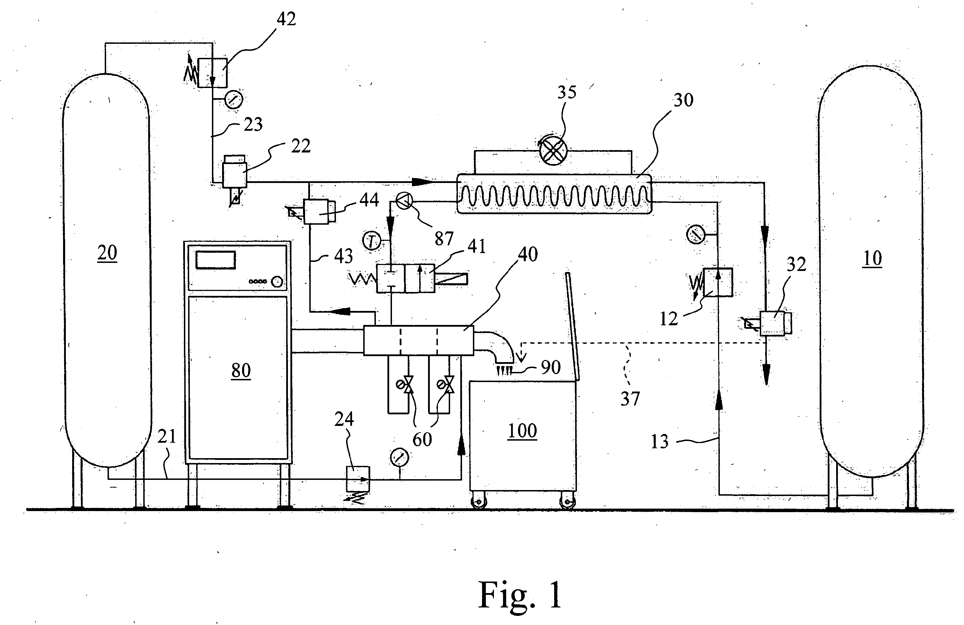

In the system of Figure 1 a thermally insulated tank 10, preferably of the LPT type (Low Pressure Tank) is shown, which is the source of carbon dioxide in the liquid state. The carbon dioxide in the tank 10 is maintained at a temperature of -20°C and at a pressure of 20 bar.

Further represented herein is a thermally insulated tank 20 which is the source of a cooling fluid, such as nitrogen, which is kept in the liquid state at a temperature of - 196°C and at a pressure of 5 bar.

The liquid carbon dioxide is drawn from the tank 10 and fed to an intermediate heat exchanger 30 to further reduce the temperature to a predetermined value, for example, to about -50°C. Along the connecting duct 13 between tank 10 and heat exchanger 30 is provided a pressure regulating valve 12 to reduce the pressure of liquid carbon dioxide at a value of about 7 bar.

The heat exchanger 30 is supplied with a cooling fluid, in particular nitrogen in the gaseous state, which is drawn from the top of the tank 20 and fed to the exchanger 30 by way of a duct 23. Along the duct 23 a pressure regulating valve 42 and a modulating pressure regulator 22 are arranged in series. A further modulating pressure regulator 32 is disposed downstream of the heat exchanger 30.

The nitrogen in the gaseous state can be periodically circulated in a closed circuit within the heat exchanger 30 by way of a fan 35. When the gaseous nitrogen is no longer capable of removing heat from carbon dioxide to lower the temperature to the prefixed value, the gaseous nitrogen is expelled from the heat exchanger 30 and discharged into the atmosphere through the modulating pressure regulator 32. The discharge of gaseous nitrogen into the atmosphere may be directed, in whole or in part, towards the inside of the container 100 (dashed line 37) in order to maintain a cooled internal atmosphere substantially devoid of moisture or, in other words to obtain the "thermal inertization" of container 100 for the pellets.

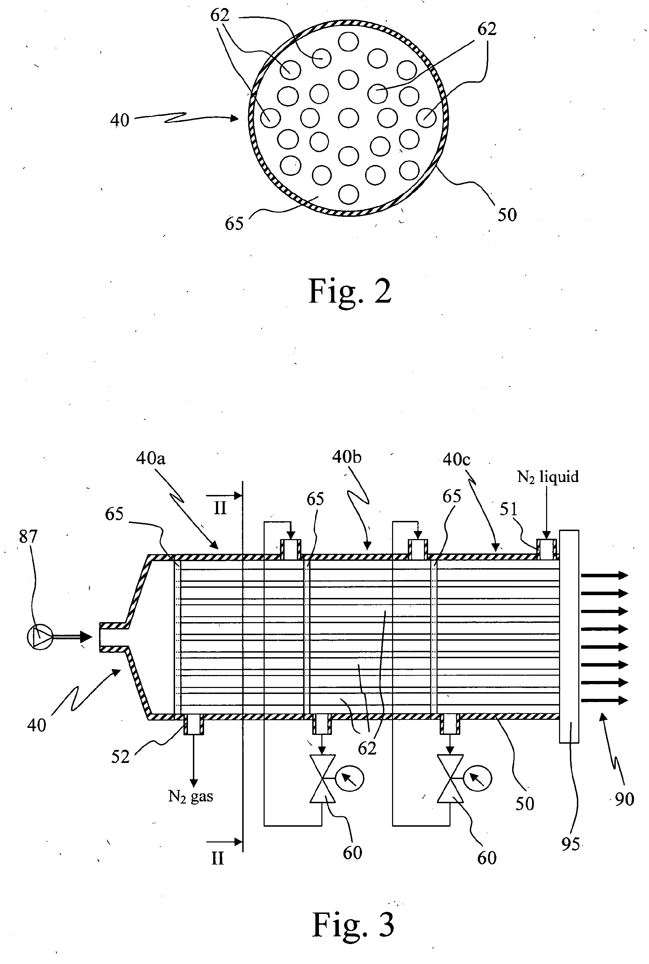

The liquid carbon dioxide exiting from the heat exchanger 30 is therefore at a temperature of about -50°C, or at least at a temperature close to that of the triple point (-56.6°C), and is fed to the heat exchanger device 40 for the formation of pellets, adjusting the flow through a solenoid valve 41. A pump 87 can be provided to exert pressure on the device 40 as will be explained in detail below referring to the embodiment of Figure 3.

The heat exchanger device 40 for the formation of pellets comprises a container 50 (Figures 2, 3 and 5) in which nitrogen is circulated, according to the modality that will be described below, which is drawn in the liquid state from tank 20 at a temperature of about -196°C and sent in the container 50 through a duct 21. A pressure regulating valve 24 is arranged along the duct 21 to maintain a liquid nitrogen supply pressure at around 5 bar.

Subsequent sections of the device 40 for the formation of pellets are interconnected in series by way of temperature controlled means 60 to regulate the flow of cooling fluid between the outlet of a section and the inlet of the next section.

The gaseous nitrogen exiting from the device 40 is directed to the heat exchanger 30 through a duct 43, directly mixing it for example, to gaseous nitrogen drawn from the top of tank 20. A modulating pressure regulator 44 placed along the duct 43 allows compensation for any variation in pressure between the circuit of liquid nitrogen and the circuit of gaseous nitrogen.

The carbon dioxide fed into the device 40 is maintained at a value of pressure higher than the triple point (5.18 bar), for example at a pressure of about 7 bar, so as to cause solidification of liquid carbon dioxide in the device 40 that is exposed to compression to form and expel the pellets 90. The latter can then be collected within a thermally insulated container 100 where a temperature below -78.5°C is maintained, i.e. a temperature below the sublimation temperature of carbon dioxide in atmospheric pressure conditions (1bar).

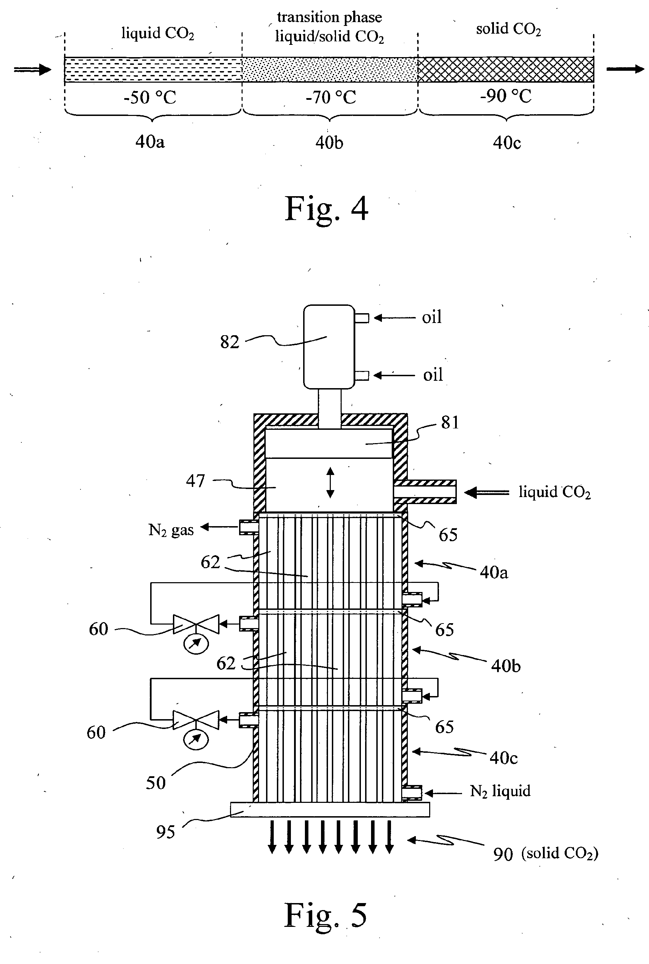

A device 80 assembles together the plant control systems and in the case of the embodiment to be described with reference to Figure 5, comprises for example, also the mechanical means acting on a mobile element of compression, as will be further explained in more detail.

Figure 2 shows a cross section of a device 40 for the formation of pellets in accordance with the present invention. The device 40 essentially comprises a container 50 which houses a bundle of tubes 62.

In the embodiment of Figure 3, the container 40 is separated into three sections by separating walls 65 crossed by tubes 62. The liquid carbon dioxide is fed to the device 40 by a pump 87, guaranteeing the maintenance of the necessary pressure to facilitate the ejection of pellets.

Taking as a reference the directional flow of carbon dioxide, the end section 40a, in which carbon dioxide in the liquid state is fed, is kept at a temperature of about - 50°C, the next section 40b is kept at a temperature of approximately -70°C and the section 40c from which the pellets are ejected is kept at a temperature of about - 90°C. The conditions that occur within a single tube 62 of the device 40 are schematically illustrated in Figure 4.

The zones at different temperatures thus provided are obtained by feeding liquid nitrogen at a temperature of -196°C through an inlet connection 51 to maintain in the section 40c of the container 50 a temperature of about -90°C. This also facilitates the starting step of production, quickly generating a "cap" of frozen carbon dioxide that allows the proper functioning of the subsequent steps of production in a continuous cycle. However, if necessary, the openings of the tubes 62 from which the pellets emerge can be sealed off at the beginning of the production to ensure the achievement of the desired temperature and pressure conditions. During the production cycle, the seal is ensured instead by the fraction of carbon dioxide in the solid state that is maintained in the section 40c.

The nitrogen exiting from section 40c is fed to the section 40b by way of a means 60 which allows flow regulation of nitrogen to maintain the desired temperature for this section (about -70°C). The same occurs to the nitrogen exiting from the section 40b, which is drawn in the inlet of section 40a through a device 60 regulating the flow of nitrogen to maintain the desired temperature (approximately -50°C) in the section 40a.

The tubes 62 inside the container 50 open at the level of a cutting device 95 which cyclically allows the cutting of the carbon dioxide pellets at a desired length during their ejection in the solid form.

In the embodiment of Figure 5, the principle of cooling the sections at different temperatures is the same as the one shown in Figure 4.

In this embodiment, the liquid carbon dioxide is fed into a chamber 47 in which a piston 81 slides activated by a hydraulic cylinder 82 with double effect to cyclically ensure the action of compression necessary for advancing carbon dioxide in the tubes 62 and ejecting the pellets 90 at the exit of the device 40.

Although not explicitly stated, it is understood that all pipes, equipment, tanks and various system devices subject to temperatures lower than the environment are properly thermo-insulated.

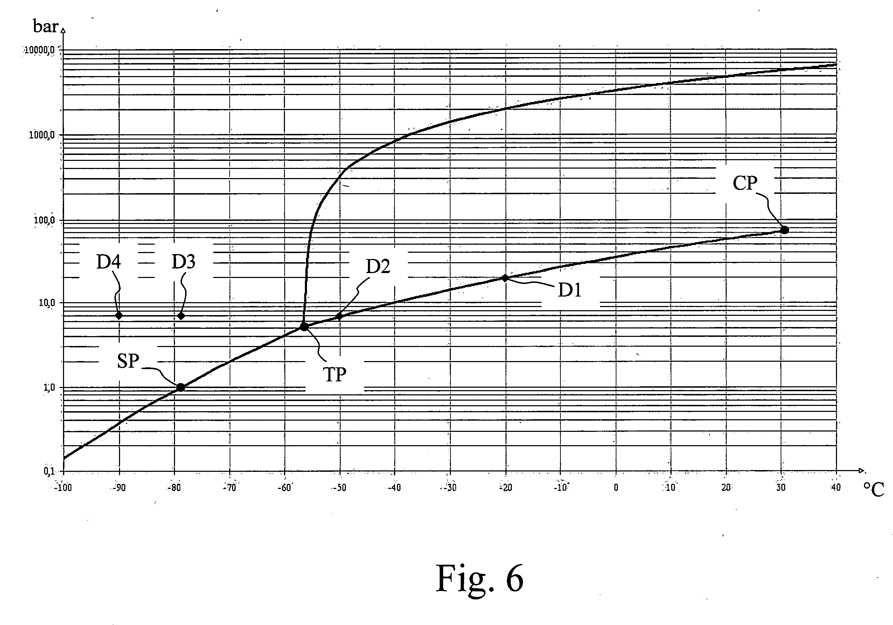

The various steps of the procedure in accordance with the present invention are briefly summarized with reference to the phase diagram of carbon dioxide represented in Figure 6: temperatures are expressed in degrees Celsius along the x-axis according to a linear scale, while the pressures are expressed in bars along the y-axis according to a logarithmic scale. In the diagram of Figure 6 the main reference points are also underlined for carbon dioxide, i.e. the critical point CP (31°C, 74 bar), the triple point TP (-56.6°C 5.18 bar) and the sublimation point SP at atmospheric pressure (-78.5°C, 1 bar).

The point D1 represents the conditions of liquid carbon dioxide in tank 10, for example referred to the case of a tank type LPT (Low Pressure Tank), in which carbon dioxide is maintained at a temperature of -20°C and a pressure of 20 bar. The valve 12 reduces the pressure of carbon dioxide drawn from the tank 10 to a value of about 7 bar and the intermediate heat exchanger 30 reduces the temperature to a value of about -50°C. Practically, carbon dioxide exiting from the heat exchanger 30 will be found for instance under the given conditions close to the point D2, i.e. temperature and pressure conditions close to those of the triple point TP. Starting from point D2, in the conditions of temperature and pressure under which carbon dioxide is fed in the section 40a of the device 40, it is possible to subject the liquid carbon dioxide at subsequent stages of cooling to overcome the curve of liquefaction and achieve solid state conditions.

For example, considering for the sake of simplicity an isobaric condition, the cooling in sections 40b and 40c of the device 40 is pushed beyond the sublimation point temperature SP, i.e. beyond the point D3 at -78.5°C and 7 bar, to prevent that the pellets just produced, once exposed to atmospheric pressure, may be subject to sublimation. For example, the temperature of carbon dioxide in the section 40c of device 40 can be lowered to about -90°C (point D4), regardless of pressure variations that may occur in the feeding of carbon dioxide to the device 40.

During the production of pellets, it is necessary to maintain the pressure in the pipes 62 of the device 40 to values higher than those of the triple point, i.e. greater than 5.18 bar to prevent the phenomena of liquefaction/sublimation of carbon dioxide already solidified. This can be achieved for example, by keeping the supply of liquid carbon dioxide always at pressures greater than the triple point, for example at 7 bar, or feeding the device 40 also with a fraction of gaseous carbon dioxide at a suitable temperature and at a pressure higher than that of the triple point TP.

Various changes may be made to the embodiments represented here, without going beyond the scope of the invention. For example, the source of carbon dioxide could also be formed theoretically by cylinders of the MPT type (Middle Pressure Tank), although this could result in a lower yield process. Similarly, other cooling fluids can also be used that are able to provide a component in the liquid state and a component in the gaseous state, such as argon, helium or the like, although currently, these types of fluids are less easily available and have higher costs than nitrogen.

## Claims

1. A system for the production of frozen carbon dioxide pellets in the solid state, including:
- at least one heat exchanger for the formation of pellets which includes a container which houses a bundle of tubes each having an inlet opening, in which carbon dioxide enters in the liquid state, and each having an output opening from which the carbon dioxide comes out in the solid state in the form of pellets, said container including at least one inlet connection and at least one outlet connection for the circulation of a cooling fluid in the device;
- at least one source of carbon dioxide in the liquid state to feed said tubes of the heat exchanger device for the formation of pellets; and
- at least one source of cooling fluid in the liquid state,
**characterized in that** said container is divided into at least three separate sections and connected in series to form in said heat exchanger device for forming pellets at least three zones with different temperatures.

2. The system according to claim 1, wherein at least one intermediate heat exchanger is provided placed between said source of carbon dioxide in the liquid state and said heat exchanger device for the formation of pellets.

3. The system according to claim 2, wherein means are provided for circulating said cooling fluid in a closed circuit within said intermediate heat exchanger.

4. The system according to claim 1, wherein said container includes at least one first end section in which said cooling fluid enters in the liquid state and at least one second end section from which said cooling fluid comes out in the gaseous state.

5. The system according to claim 1, wherein temperature controlled means are provided for adjusting the flow of said cooling fluid between the output of cooling fluid from a section of said container and the input of cooling fluid in the next section.

6. The system according to claim 1 or 2, wherein the output of the second end section from which said cooling fluid comes out from said container is connected to the inlet of said intermediate heat exchanger.

7. The system according to claim 1, wherein at least one pump is provided along the supply line of liquid carbon dioxide to said heat exchanger device for the formation of pellets to increase, in a controlled way, the supply pressure of liquid carbon dioxide entering said tubes.

8. The system according to claim 1, wherein mechanical mobile means are provided which act at the level of the input section of carbon dioxide in said heat exchanger device for the formation of pellets to increase, in a controlled way, the pressure of the liquid carbon dioxide entering said tubes.

9. A process for the production of frozen carbon dioxide pellets in the solid form, comprising the steps of:
a) drawing carbon dioxide in the liquid form from a source which is at a prefixed temperature and pressure and supplying it to at least one heat exchanger for the formation of pellets, said device including a container which houses a bundle of tubes, each having an inlet opening into which carbon dioxide enters in the liquid state, and each having an outlet opening from which the carbon dioxide comes out in the solid state in the form of pellets, said container comprising at least one inlet connection and at least an outlet connection for the circulation of a cooling fluid into the device;
b) circulating a cooling fluid in said container that houses said tubes keeping them at a temperature lower than that of the carbon dioxide in the liquid state present in said source;
**characterized in that** said container is divided into at least three separate sections and connected in series to form, within said heat exchanger device for the formation of pellets, at least three zones with different temperatures.

10. The process according to claim 9, wherein said carbon dioxide in the liquid state is cooled to a temperature between the temperature of the liquid carbon dioxide of said source and the temperature of the triple point of carbon dioxide, cooling being achieved through an intermediate heat exchanger in which said cooling fluid is circulated.

11. The process according to claim 9 or 10, wherein the cooling fluid is fed in the liquid state into said container and is recovered upon exiting in the gaseous state from said container to be directed as a cooling fluid into said intermediate heat exchanger.

12. The process according to claim 9 or 10, wherein said cooling fluid is periodically circulated along a closed circuit within said intermediate heat exchanger.

13. The process according to claim 9, wherein the flow of said cooling fluid between the output of cooling fluid from a section of said container and the input of cooling fluid in the next section is adjusted according to the temperature.

14. The process according to claim 9, wherein said pellets are formed within said tubes by way of hydraulic pressure exerted by the carbon dioxide entering said tubes.

15. The process according to claim 9, wherein said pellets are formed by way of mechanical pressure exerted by at least one mobile element upon the carbon dioxide entering said tubes.
